# EUROPEAN PATENT SPECIFICATION

(11) **EP 1 775 560 B1**
(45) Date of publication and mention of the grant of the patent: **22.12.2010**
(21) Application number: 06076302.6
(22) Date of filing: 27.06.2006
(51) Int. Cl.: G01F 1/66, B01F 5/06

(54) **Ultrasonic flow meter with flow mixer**
Ultraschalldurchflussmesser mit Strömungsmischer
Débitmètre ultrasonique avec mélangeur de flux

(30) Priority: 14.10.2005 EP 05077366
(43) Date of publication of application: 18.04.2007
(73) Proprietor: KAMSTRUP A/S, 8660 Skanderborg (DK)
(72) Inventor: Borring, Peter Nordlund, 7100 Vejle (DK); Skallebæk, Anders, 8660 Skanderborg (DK)
(74) Representative: Plougmann & Vingtoft A/S

(56) References cited:
- US-A- 3 949 970
- US-A- 4 365 518
- US-A- 4 747 697
- US-A- 4 929 088
- US-B1- 6 857 323
- L.F. Richardson: "Weather Prediction by Numerical Process" 1922, Cambridge University Press , Cambridge ISBN: 9780521680448 , pages 66-66

## Description

### FIELD OF THE INVENTION

The invention relates to an ultrasonic flow meter to improve measurements of the flow rate, in particular the invention relates to an ultrasonic flow meter comprising a flow mixer having at least a first and a second mixing means influencing the flow in the flow passage of the flow meter.

### BACKGROUND OF THE INVENTION

An ultrasonic flow meter typically comprises a flow passage embracing a measuring section wherein ultrasonic signals are propagating along the flow direction and in the opposite direction, so that the propagation speeds can be compared for the two directions, and from the comparison extracting the flow rate of a flowing fluid in the measuring section.

One problem encountered in flow meters is that of inaccuracies in the detected speed of sound transmission caused by flow disturbances, such as irregular fluctuations, e.g. eddies and swirls causing non-symmetrical flow profiles resulting in non-linearity and non-repeatability in the flow measurement. One means of reducing flow disturbances is to introduce flow straighteners in the flow passage. US patent 4,365,518 entitled "Flow Straighteners in Axial Flow Meters" is an example of the use of flow straighteners to improve the performance of flow meters.

In US patent 4,929,088 a static mixing device to be inserted in a fluid stream is disclosed. The mixing device comprises at least two tabs inclined in the flow direction. The length and width of the tabs are selected so as to generate pairs of oppositely rotating predominantly streamwise vortices at the tips of each tab. The mixing device generates a controlled generation of vortices, or swirling motion in the flow, such that the swirling motion cause the movement of fluid perpendicular to the main flow direction with the effect of producing adequate cross-stream mixing.

US patent 3, 949, 970 discloses an in-line mixer for fluids, comprising an elongated open-ended, hollow tube and stationarily positioned therein two or more elongated, helically twisted and interengaging strips which are tightly enclosed by the tube.

US patent 6, 857,323 discloses a method and system for accurately measuring the two phase flow rate of a fluid mixture that includes two different phase components.

The inventors of the present invention have appreciated that an improved measurement accuracy of the flow rate in an ultrasonic flow meter is of benefit, and have in consequence devised the present invention.

### SUMMARY OF THE INVENTION

The present invention seeks to provide an improved ultrasonic flow meter. Preferably, the invention alleviates, mitigates or eliminates one or more disadvantages of the prior art singly or in any combination. Moreover, it may be seen as an object of the invention to provide an ultrasonic flow meter enabling improved flow measurement of a fluid flowing through the meter by means of a flow mixer.

Accordingly there is provided, in a first aspect,

an ultrasonic flow meter comprising
a flow passage with an inlet and an outlet, the flow passage having a flow direction from the inlet to the outlet,
an ultrasound transducer for generating ultrasonic signals and for directing such signals in opposite directions along a measuring section, the measuring section extending along at least part of the flow passage, and a flow mixer for mixing a flow in the ultrasonic flow meter, the flow mixer being placed upstream of the measuring section,
**characterized in that** the flow mixer comprises at least a first and a second mixing means, the first and second mixing means being oppositely twisted along a flow direction, and wherein a direction of extension of a front cross-section of the first and second mixing means and the direction of extension of a back cross-section of the first and second mixing means define a twisting angle of the mixing means..

Ultrasonic flow meters are used for a number of applications, e.g. for surveying the amount of hot or cold water used in a building, a household, etc., and it is important that the consumed amount of fluid is measured accurately. Flow disturbances present in the measuring section of the flow meter may adversely affect the obtainable measurement accuracy. The fluid flowing in the measuring section of a flow meter typically contains some, and possibly many, flow disturbances of different origin and nature. Flow disturbances may arise from protrusions present in the flow passage, from tube bends, etc. The present invention seeks to provide a flow meter where at least some of the flow disturbances, and preferable at least some of the flow disturbances adversely affecting the measurement accuracy, are removed from the measuring section. In order to do so a flow mixer for mixing a flow in an ultrasonic flow meter is provided where the incoming fluid is affected in two opposite manners.

Reference is made to a flow mixer comprising mixing means. In US patent 4,365,518 reference is made to a flow straightener comprising divider means; and in US patent 4,929,088 reference is made to a mixing device comprising tabs. Thus, the terminology in the art is not consistent. Therefore, reference could alternatively e.g. be made to a flow straightener comprising straightening means, to a flow device comprising fins, to a flow improver comprising improving means. A combination of the mentioned examples, or other terms could also be envisioned. In US patent 4,929,088 the purpose of the flow device is to induce swirls in the flow in order to ensure effective mixing. In contrast the present invention seeks to provide a flow meter where such flow disturbances as swirls are removed from the flow. This may also be seen as a purpose of US patent 4,365,518, and consequently a terminology consistent with this document has been applied.

Important flow disturbances arise from swirls present in the fluid flow, and it may be advantageous to suppress the number of swirls present in the flow in the measuring section. A swirl rotating in a clockwise direction will be affected by the presence of the first and second mixing means, and a swirl rotating in a counter-clockwise direction will also be affected by the present of the first and second mixing means. But by providing the first and second mixing means being oppositely twisted along the flow direction a relatively larger impeding effect on a rotation of the flow in a clockwise direction than on a rotation of the flow in a counter-clockwise direction by the first mixing means, and vice-versa for the second mixing means is achieved, and the over-all effect of the flow mixer is that the flow will after passage of the flow straightener of the present invention contain less swirls. In general may a number of flow disturbances adversely affect the measuring accuracy of the flow meter be removed, or at least diminished, due to the passing of the flow mixer in accordance with the present invention. The removal or diminishing of flow disturbances adversely affect the measuring accuracy may from the viewpoint of the flow meter be seen as a mixing of the flow. The swirls present in a given tube installation including a flow meter is for the specific installations at a given time rotating either in a clockwise manner or in a counter-clockwise manner. The improved measuring accuracy may therefore be seen as an improved measuring accuracy of an ensemble of flow meters, since an ensemble of flow meters in accordance with the present invention may exhibit more consistent results due to the presence of the flow mixer in accordance with the present invention.

A further advantage of the present invention is that the pressure drop across a flow mixer in accordance with the present invention may be small, especially it may be small as compared to the pressure drop across the entire flow meter, and it may be small as compared to flow mixers of the prior art.

The first and second mixing means are each oppositely twisted along the flow direction, i.e. mixing means in a pair of mixing means may be mirror-symmetric in a symmetry plane in-between the mixing means. The twisting angle of the first mixing means and the second mixing means may be substantially equal. This results in that the impeding effect of the first straightening means may substantially be counter-balanced by the impeding effect of the second straightening means. This may be advantageous since it may be more easy to fabricate a flow mixer where the impeding effects of the mixing means are substantially counter-balanced, however also the effect of the flow mixer in terms of removing or suppressing flow disturbances may benefit from counter-balanced mixing means.

The twisting angle may be in the range between 1 and 180 degrees, such as in the range between 15 and 150 degrees, such as in the range between 30 and 120 degrees, such as in the range between 45 and 75 degrees. The range 45 to 75 degrees may preferably be used, since at least in some situations, the effect of the flow mixer may be superior in this range.

The at least first and second mixing means may constitute a pair of mixing means, so that a pair of mixing means constitutes a first mixing means and a second mixing means. In specific embodiments may two or more pairs of mixing means be present, such as 2, 3, 4, 5, 10, 15 or even more pairs of mixing means may be present.

mixing means may be provided with a given geometrical shape. The mixing means may have an extension in a cross-section perpendicular to the flow direction. A direction of the extension of the cross-section of a given mixing means may change along the flow direction, e.g. by having a cross-sectional shape of a given mixing means where the orientation of the cross-sectional shape changes along the flow direction. The shape of the cross-section of a given mixing means may change along the flow direction. In the event that the shape of the cross-section changes along the flow direction, or in general, may the direction of extension of the cross-section, be taken as a direction characteristic for the shape of the cross-section, e.g. as a direction characteristic of the direction of the surface of the mixing means, such as a direction parallel with the surface of the mixing means.

The flow mixer may comprise a frame, wherein the mixing means are attached to the frame and protrude away from the frame, as an alternative may the mixing means be attached directly in the flow passage, e.g. by welding them to the inside of the flow passage. This may be advantageous in large diameter flow meters. The individual mixing means may be separated by a separation distance. It may be important that the individual mixing means in the flow mixer are separated so that objects in the fluid flow, such as material used for tightening pipe joining, are not caught by the mixing means and thereby inhibiting the fluid flow.

As an alternative to protruding mixing means, the mixing means may be grooves in the frame.

The flow mixer may have a ratio (L/D) between a length of the flow mixer and a diameter of the flow mixer in the range of 0.5 to 3. The length of the flow mixer is the length along the flow direction, whereas the diameter may be taken as the outer diameter of the frame or as the diameter of an enveloping cylinder of the mixing means.

The flow mixer is placed upstream of the measuring section. The placement of the flow mixer may be determined from the overall shape of the flow meter. Especially for compact, or small-sized, flow meters may the exact placement of the flow mixer be important, where the flow straightener is placed close to the measuring section, possible even overlapping the measuring section.

It may be an advantage to fabricate the flow mixer as a single unit, in this way may the flow mixer be fabricated separately from the rest of the flow meter and inserted in connection with the assembly. Alternatively may a flow meter not originally installed with a flow mixer of the present invention be provided with a flow mixer at a later stage, or the flow mixer may be changed at a later stage. As a further advantage may a single unit flow mixer be more robust.

The flow meter may be fabricated as a single unit including the flow mixer so that the flow mixer is an integral part of the flow meter, i.e. the flow mixer may be an integral part of the housing of the flow meter. This may be advantageous e.g. for reducing the number of assembly steps of the flow meter.

The flow mixer may be fabricated in any suitable material, and more specifically may flow mixer may be fabricated in a material selected from the group of: synthetic materials, stainless steel, ceramics, composites, copper and copper alloy. The flow mixer may also be fabricated in a first material and subsequently coated with a second material, the first and second materials may be selected from the above-mentioned group.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 illustrates a cross-sectional view of an ultrasonic flow meter,
FIG. 2 illustrates a first embodiment of a flow mixer,
FIG. 3 illustrates a second embodiment of a flow mixer,
FIG. 4 illustrates a third embodiment of a flow mixer,
FIG. 5 illustrates additional embodiments of flow mixers,
FIG. 6 shows flow measurement graphs.

### DESCRIPTION OF EMBODIMENTS

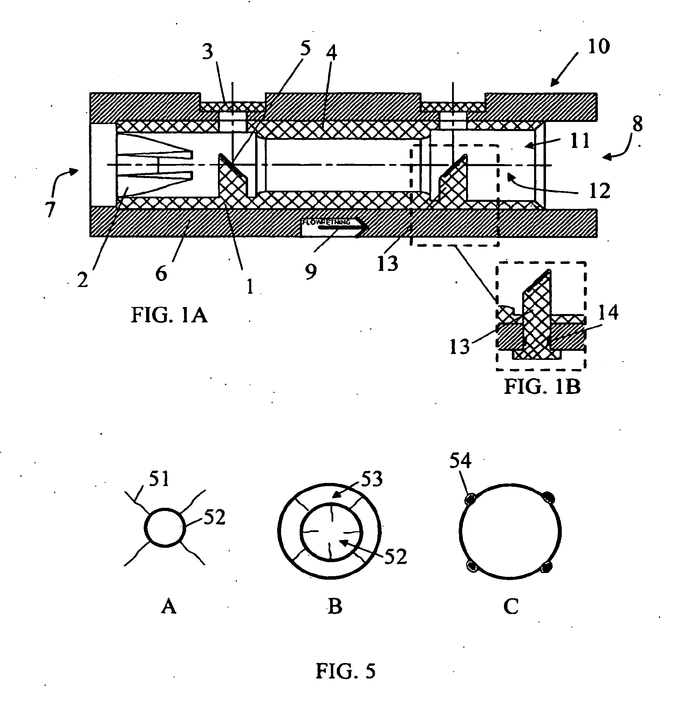

An embodiment of an ultrasonic flow meter in accordance with the invention is illustrated in FIG. 1A. The Figure shows a cross-sectional view of the ultrasonic flow meter, as generally indicated by the reference numeral 10. The flow meter comprises a flow passage 11 with a centre axis 12, the flow passage being defined by an axial tube 1 including a measuring section 4, the measuring section extending along a part of the flow passage. The axial tube defining an inlet 7 and an outlet 8 of the flow passage, so that a flow direction 9 is defined as a direction from the inlet to the outlet extending along the centre axis. Ultrasound transducers 3 for generating and detecting ultrasonic signals are placed in the side of the house 6 of the flow meter. The house and the axial tube having openings so that the generated signals can be introduced into the measuring section. Reflectors 5 are placed upstream and downstream of the measuring section, so that the signals emitted from the transducers are directed into the measuring section where they propagate in opposite directions along the measuring section, and directed onto the opposite transducer for detection. The axial tube 1 and the house 6 are shown as separate entities. It is however to be understood than the tube is not necessarily a liner in the house. The tube and the house may be provided as a complete, or single, unit. The different hatching of the tube and the house is for illustrative purposes and does not indicate a preference of an assembled flow meter.

FIG. 1B illustrates an alternative means of providing the protrusions 13 supporting the reflectors 5. In this embodiment, the protrusions 13 are fabricated as separate units and inserted into the flow passage. The protrusions (or alternatively the house) may be provided with tightening means 14, such as 0-rings.

In a typical determination of a fluid flow, ultrasonic signals are simultaneously emitted from the two ultrasound transducers. Signals propagating upstream propagate faster than signals propagating downstream, and the flow rate can be determined by measuring difference in arrival time of the emitted signals at the other transducers. The determination of the flow rate, as well as the outputting of the flow rate may be done by an analogue or digital unit electrically connected to the transducers.

A determination of the flow rate by use of propagation of ultrasound in the flowing fluid is influenced by the presence of flow disturbances in the flow in the measuring section. Such flow disturbances may arise from many sources, and the flow just before entering the inlet of the axial tube typically contains a number of flow disturbances, such as local variations in flow speed, eddies, swirls, etc. It is known in the art that in order to improve determinations of the flow rate, flow mixers 2 before and/or in the measuring section may be employed. The flow mixer 2 is placed upstream of the measuring section.

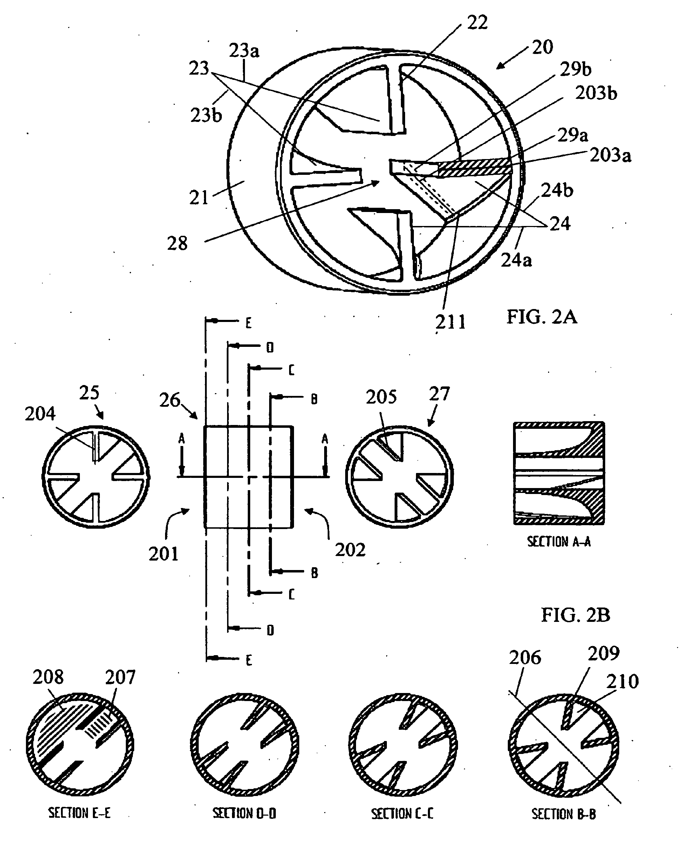

FIGS. 2-4 illustrate embodiments of the flow mixer in accordance with the present invention. It is to be understood that the invention is not limited to flow meters including flow mixers as illustrated in Figures. The scope of the invention is determined only by the accompanying claims, the flow mixers are illustrated only as embodiments falling within the scope of the invention.

FIG. 2 illustrates a first embodiment of a flow mixer in accordance with the present invention.

FIG. 2A illustrates a 3D-view of a flow mixer 20. The flow mixer comprises a frame 21 and four mixing means 22. The mixing means are in this embodiment attached to the frame and protrude inwards away from the frame, and individual mixing means are separated by a separation distance, i.e. a central opening 28 is present. It is an advantage of the present invention that the opening allows objects of a certain size to pass, thereby at least diminishing the risk of blocking the flow from an object getting stuck in the flow mixer.

The flow mixer comprises two pairs of pair of mixing means 22, a first pair 23 and a second pair 24. Thus, a first 23a, 24a and a second 23b, 24b mixing means constitute each pair of the mixing means. The first mixing means 23a, 24a have a relatively larger impeding effects on a rotation of the flow in a clockwise direction than on a rotation of the flow in a counter-clockwise direction, and the second mixing means 23b have a relatively larger impeding effect on a rotation of the flow in the counter-clockwise direction than on a rotation of the flow in the clockwise direction.

In the illustrated embodiment, the mixing means are twisted, or smoothly turning, along the flow direction of the flow mixer, the flow direction being a direction perpendicular to the plane of the Figure, either into the plane or out of the plane. The twisting of the mixing means is further illustrated in FIG. 2B where cross-sections of the flow mixer of FIG. 2A are shown. A cross-section 25 as seen from one end 201 of the straightener 26, a cross-section 27 as seen from the other end 202 of the mixer 26 are shown together with four cross-sections obtained in between the two ends, these cross-sections are denoted section B-B to E-E. The section A-A is obtained along the flow mixer 26. For the mixing means, in addition to the cross-section itself 209, also the projection 210 of the entire mixing means is indicated. The twisting need not to be constant along the flow mixer, but it will typically be the case.

A mixing means has an extension in a cross-section perpendicular to the flow direction. Two cross-sections 29a, 29b are accentuated. A direction of extension 203a, 203b may be assigned to each cross-section, such as a direction of extension is extending along the plane of the cross-section, i.e. a direction of extension pointing from an attachment point on the frame and inwards towards an inner point of a free end of the mixing means. In the illustrated embodiment, the extension of the cross-section of the mixing means changes along the flow direction. The changing of the extension of the cross-section can also be seen on the sections B-B to E-E, where the cross-sections in section B-B are almost symmetrically distributed around the frame, whereas the cross-sections in section E-E are almost parallel arranged along a centre axis. The orientation of the extension of the cross-sections along the flow direction slowly changes until a twisting angle between the orientation 204 of the front cross-section 29a and the orientation 205 of the back cross-section is 45 degrees. In general may the twisting angle be in the range between 1 and 180 degrees. The changing of the direction of extension of the cross-section gives rise to a curved attachment line 211 of each of the mixing means.

The twisting of the mixing means may also be described in terms of cross-sectional area between two adjacent mixing means. Inter-mixing means cross-sectional areas are illustrated on the Section E-E, where two cross-sectional areas 207, 208 alternate between subsequent mixing means. In this embodiment, the inter-mixing means cross-sectional areas are substantial equal at one end 201, whereas two are larger than the other two at the other end 202 of the flow mixer.

The oppositely twisting of the individual mixing means in a pair, may also be looked upon as a mirroring in a mirror-plane 206 between the mixing means.

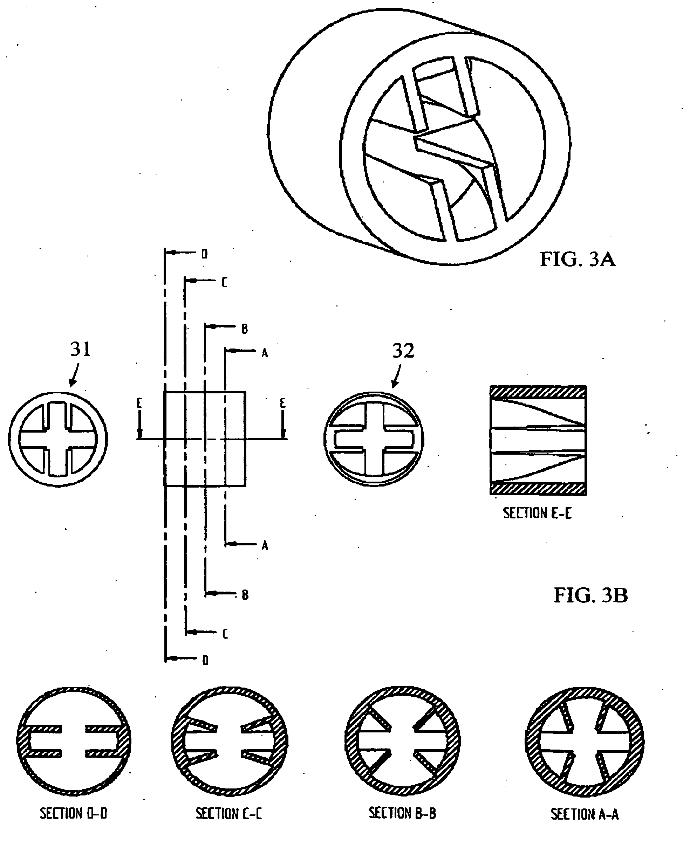

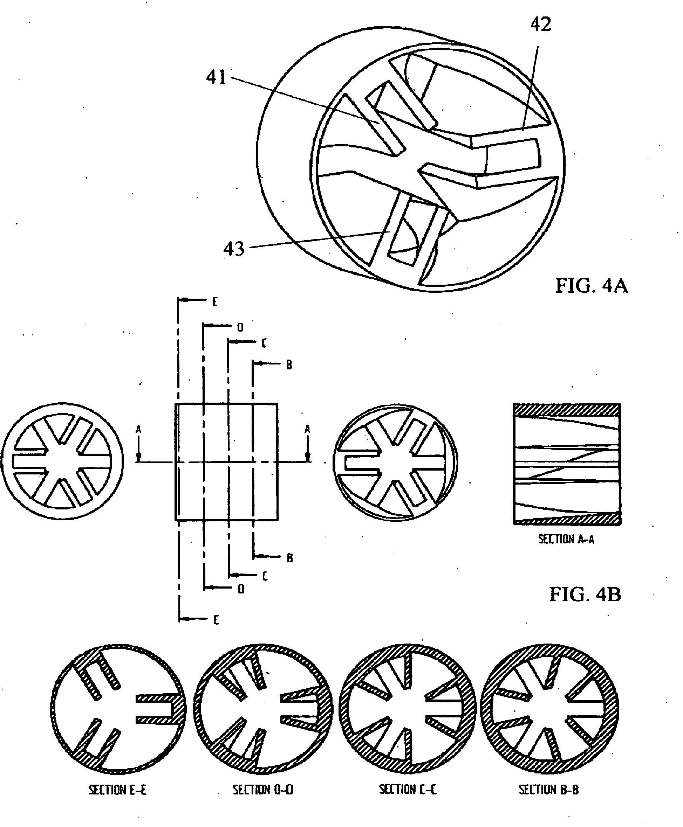

The FIGS. 3 and 4 illustrate alternative embodiments of the flow mixer. FIG. 3 illustrates a flow mixer similar to the flow mixer of FIG. 2, except that the twisting of the mixing means are 90 degrees between the orientation of the front cross-section 31 and the orientation of the back cross-section 32 for each mixing means.

In the embodiment illustrated in FIG. 4 three pairs 41, 42, 43 of the mixing means are present.

It should be noted that the frame of a flow mixer may be inclined, i.e. thicker in one end than in another end. This is e.g. the case with the flow mixers of FIGS. 3 and 4, as can be seen by the thickness of the frame in the sections AA-DD in FIG. 3 and BB-EE in FIG. 4. In FIG. 2, the thickness of the frame remains constant.

The dimensions of a flow mixer may depend upon a number of things. Typically, the outer dimensions are such that the flow mixer fit in the flow passage, in this way the attachment of the flow mixer is simplified, however a flow mixer smaller than an inner size of a flow passage may be attached in the flow passage by separate attachment means (not shown). The size and number of the mixing means may be chosen depending upon the flow meter, the typical fluid flow, etc. The length of a flow mixer in the direction of the flow, may depend upon the desired size of the entire flow meter, alternatively it may depend upon a resulting pressure drop, or it may depend upon other factors.

Additional embodiments of flow mixers are shown in FIG. 5.

FIG. 5A and 5B illustrate embodiments where individual mixing means of the type described in FIG. 2-4 are attached to a frame. In FIG. 5A the mixing means 51 are attached at an inner circular holder 52. FIG. 5B illustrates an embodiment with concentric sections 52, 53 including mixing means in accordance with the present invention, more sections may also be envisioned. Also embodiment wherein a shape of the cross-section of the at least first and second mixing means changes along the flow direction may be envisioned, e.g. by providing mixing means where the area of the cross-section increased or decreases along the flow direction.

FIG. 5C illustrates an embodiment where instead of inwardly protruding straightening means, the mixing means is constituted by grooves 54 in the frame, e.g. as grooves running along lines as denoted 211 on FIG. 2, or e.g. by a particular shape of a cross-section of a groove, either the same cross-sectional shape running along the flow direction, or a shape where the cross-sectional area increased or decreases along the flow direction.

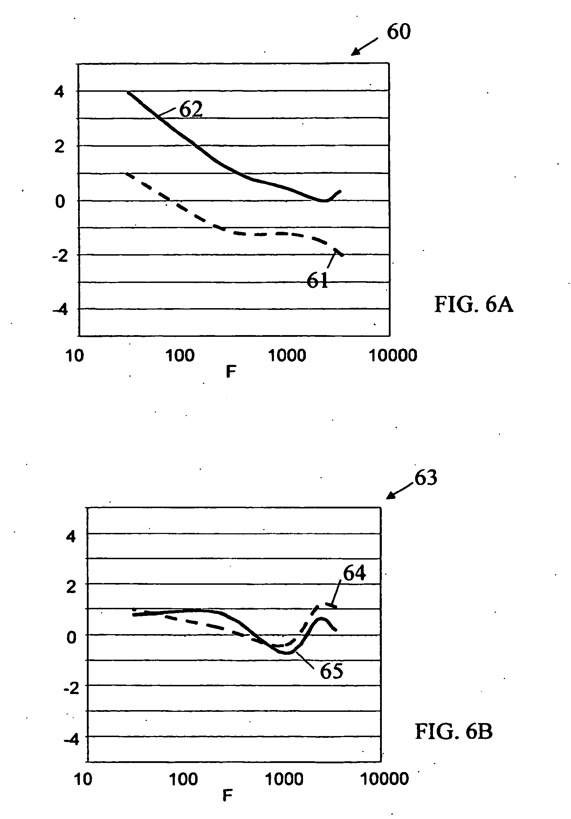

FIG. 6 shows test results illustrating improved measurement accuracy obtained for a flow meter with a flow mixer in accordance with the present invention. The graphs show the relative error in percent as a function of the flow, F, between a flow measurement obtained for a flow without swirls present in the incoming fluid and a flow with imposed swirls in the incoming fluid. The flow without swirls is obtained by introducing the flow into the flow meter via a straight tube, whereas the flow with imposed swirls is obtained by introducing the flow into the flow meter via a straight tube with a curved liner, the curved liner being either right-turned or left-turned, thereby imposing a clockwise rotating swirl or a counter-clockwise rotating swirl. The inlet tube of the measurements is a 25.4 mm times 190 mm (1" times 190 mm) tube.

FIG. 6A shows measurements 60 obtained for a flow mixer with four straight mixing means parallel with the flow direction, i.e. mixing means where the impeding effect for clockwise rotating swirls is the same as for count-clockwise rotating swirls. The curve denoted 61 is obtained for clockwise rotating swirls, whereas the curve denoted 62 is obtained for counter-clockwise rotating swirls

FIG. 6B shows measurements 63 obtained for a flow mixer in accordance with the present invention. The flow mixer is of the type illustrated in FIG. 2, with two pairs of flow mixers with twisting angles of 45 degrees. The curve denoted 64 is obtained for clockwise rotating swirls, whereas the curve denoted 65 is obtained for counter-clockwise rotating swirls. The graphs 60, 63 are drawn to the same scale and it is clear from a comparison between the two graphs, that an improved measurement accuracy is obtained in FIG. 6B, i.e. with a flow mixer in accordance with the present invention.

Although the present invention has been described in connection with preferred embodiments, it is not intended to be limited to the specific form set forth herein. Rather, the scope of the present invention is limited only by the accompanying claims.

## Claims

1. An ultrasonic flow meter (10) comprising
a flow passage (11) with an inlet (7) and an outlet (8), the flow passage having a flow direction (9) from the inlet to the outlet,
an ultrasound transducer (3) for generating ultrasonic signals and for directing such signals in opposite directions along a measuring section (4), the measuring section extending along at least part of the flow passage, and
a flow mixer (2, 20) for mixing a flow in the ultrasonic flow meter, the flow mixer being placed upstream of the measuring section,
**characterized in that** the flow mixer comprises at least a first (23a, 24a) and a second (23b, 24b) mixing means, the first and second mixing means being oppositely twisted along a flow direction, and wherein a direction of extension of a front cross-section (204) of the first and second mixing means and the direction of extension of a back cross-section (205) of the first and second mixing means define a twisting angle of the mixing means.

2. Ultrasonic flow meter (10) according to claim 1, wherein the twisting angle of the first mixing means and the second mixing means are substantially equal.

3. Ultrasonic flow meter (10) according to claim 2, wherein the twisting angle is in the range between 1 and 180 degrees, such as in the range of 45 to 75 degrees.

4. Ultrasonic flow meter (10) according to any of the preceding claims, wherein the at least first and second mixing means constitute a pair (23, 24) of mixing means, and wherein the flow mixer comprises two or more pairs of mixing means.

5. Ultrasonic flow meter (10) according to any of the preceding claims, wherein the at least first and second mixing means have an extension in a cross-section (29a, 29b) perpendicular to the flow direction, and wherein a direction of the extension (203a, 203b) of the cross-section of the at least first and second mixing means changes along the flow direction.

6. Ultrasonic flow meter (10) according to any of the preceding claims, wherein a shape of the cross-section (29a, 29b) of the at least first and second mixing means changes along the flow direction.

7. Ultrasonic flow meter (10) according to any of the preceding claims, wherein the flow mixer comprises a frame, and wherein the mixing means are attached to the frame and protrude inwards away from the frame, and wherein individual mixing means are separated by a separation distance (28).

8. Ultrasonic flow meter (10) according to any of the claims 1-6, wherein the flow mixer comprises a frame (21), and wherein the mixing means are grooves (54) in the frame.

9. Ultrasonic flow meter (10) according to any of the preceding claims, wherein the ratio L/D between a length of the flow mixer and a diameter of the flow mixer is in the range of 0.5 to 3.

10. Ultrasonic flow meter (10) according to any of the preceding claims, wherein the flow mixer is fabricated as a single unit.

11. Ultrasonic flow meter (10) according to any of the preceding claims, wherein the flow meter is fabricated as a single unit and wherein the flow mixer is an Integral part of the flow meter.

12. Ultrasonic flow meter (10) according to claim 1, wherein the material of the flow mixer is a material selected from the group of: synthetic materials, stainless steel, ceramics, composites, copper and copper alloy.

## Patentansprüche

1. Ultraschallströmungsmesser (10), umfassend
einen Strömungsdurchgang (11) mit einem Eingang (7) und einem Ausgang (8), wobei der Strömungsdurchgang eine Strömungsrichtung (9) vom Eingang zum Ausgang aufweist,
einen Ultraschallwandler (3) zum Erzeugen von Ultraschallsignalen und zum Richten derartiger Signale in gegenüberliegende Richtungen entlang eines Messabschnitts (4), wobei sich der Messabschnitt entlang mindestens eines Teils des Strömungsdurchgangs erstreckt, und
einen Strömungsmischer (2, 20) zum Mischen einer Strömung im Ultraschallströmungsmesser, wobei der Strömungsmischer stromaufwärts zum Messabschnitt angeordnet ist,
**dadurch gekennzeichnet, dass** der Strömungsmischer mindestens ein erstes (23a, 24a) und ein zweites (23b, 24b) Mischmittel umfasst, wobei das erste und das zweite Mischmittel in entgegengesetzten Richtungen entlang einer Strömungsrichtung verdreht sind, und wobei eine Ausdehnungsrichtung eines vorderen Querschnitts (204) des ersten und zweiten Mischmittels und die Ausdehnungsrichtung eines rückwärtigen Querschnitts (205) des ersten und zweiten Mischmittels einen Verdrehwinkel des Mischmittels festlegen.

2. Ultraschallströmungsmesser (10) nach Anspruch 1, wobei der Verdrehwinkel des ersten Mischmittels und des zweiten Mischmittels im Wesentlichen gleich ist.

3. Ultraschallströmungsmesser (10) nach Anspruch 2, wobei der Verdrehwinkel im Bereich zwischen 1 und 180 Grad, wie im Bereich von 45 bis 75 Grad liegt.

4. Ultraschallströmungsmesser (10) nach einem der vorhergehenden Ansprüche, wobei das mindestens erste und zweite Mischmittel ein Paar (23, 24) Mischmittel darstellt und wobei der Strömungsmischer zwei oder mehr Paare Mischmittel umfasst.

5. Ultraschallströmungsmesser (10) nach einem der vorhergehenden Ansprüche, wobei das mindestens erste und zweite Mischmittel eine Ausdehnung in einem Querschnitt (29a, 29b) senkrecht zur Strömungsrichtung aufweisen und wobei eine Richtung der Ausdehnung (203a, 203b) des Querschnitts des mindestens ersten und zweiten Mischmittels sich entlang der Strömungsrichtung verändert.

6. Ultraschallströmungsmesser (10) nach einem der vorhergehenden Ansprüche, wobei sich eine Form des Querschnitts (29a, 29b) des mindestens ersten und zweiten Mischmittels entlang der Strömungsrichtung verändert.

7. Ultraschallströmungsmesser (10) nach einem der vorhergehenden Ansprüche, wobei der Strömungsmischer einen Rahmen umfasst und wobei die Mischmittel an dem Rahmen befestigt sind und nach innen weg vom Rahmen vorstehen und wobei die einzelnen Mischmittel durch einen Trennabstand (28) voneinander getrennt sind.

8. Ultraschallströmungsmesser (10) nach einem der Ansprüche 1-6, wobei der Strömungsmischer einen Rahmen (21) umfasst und wobei die Mischmittel Rinnen (54) im Rahmen darstellen.

9. Ultraschallströmungsmesser (10) nach einem der vorhergehenden Ansprüche, wobei das Verhältnis L/D einer Länge des Strömungsmischers zu einem Durchmesser des Strömungsmischers im Bereich von 0,5-3 liegt.

10. Ultraschallströmungsmesser (10) nach einem der vorhergehenden Ansprüche, wobei der Strömungsmischer als eine Einheit hergestellt ist.

11. Ultraschallströmungsmesser (10) nach einem der vorhergehenden Ansprüche, wobei der Strömungsmesser als eine Einheit hergestellt ist und wobei der Strömungsmischer integrierter Bestandteil des Strömungsmischers ist.

12. Ultraschallströmungsmesser (10) nach Anspruch 1, wobei das Material des Strömungsmischers ein Material ist, ausgewählt aus der Gruppe, bestehend aus:
synthetischen Werkstoffen, Edelstahl, Keramik, Verbundstoffen, Kupfer und Kupferlegierung.

## Revendications

1. Débitmètre à ultrasons (10) comprenant
un passage d'écoulement (11) comportant une entrée (7) et une sortie (8), le passage d'écoulement possédant une direction d'écoulement (9) de l'entrée vers la sortie,
un transducteur à ultrasons (3) destiné à générer des signaux ultrasonores et à orienter ces signaux dans des directions opposées le long d'une section de mesure (4), la section de mesure s'étendant le long d'au moins une partie du passage d'écoulement, et
un mélangeur de fluides (2, 20) destiné à mélanger un écoulement dans le débitmètre à ultrasons, le mélangeur de fluides étant placé en amont de la section de mesure,
**caractérisé en ce que** le mélangeur de fluides comprend au moins un premier (23a, 24a) et un deuxième (23b, 24b) moyen de mélange, le premier et le deuxième moyen de mélange étant torsadés en sens opposé le long d'une direction d'écoulement, et dans lequel une direction d'extension d'une section transversale avant (204) du premier et du deuxième moyen de mélange et la direction d'extension d'une section transversale arrière (205) du premier et du deuxième moyen de mélange définissent un angle de torsion du moyen de mélange.

2. Débitmètre à ultrasons (10) selon la revendication 1, dans lequel les angles de torsion du premier moyen de mélange et du deuxième moyen de mélange sont substantiellement égaux.

3. Débitmètre à ultrasons (10) selon la revendication 2, dans lequel l'angle de torsion se situe dans la plage de 1 à 180 degrés, tel que dans la plage de 45 à 75 degrés.

4. Débitmètre à ultrasons (10) selon l'une quelconque des revendications précédentes, dans lequel les au moins premier et deuxième moyens de mélange constituent une paire (23, 24) de moyens de mélange, et dans lequel le mélangeur de fluides comprend au moins deux paires de moyens de mélange.

5. Débitmètre à ultrasons (10) selon l'une quelconque des revendications précédentes, dans lequel les au moins premier et deuxième moyens de mélange possèdent une extension dans une section transversale (29a, 29b) perpendiculaire à la direction d'écoulement, et dans lequel une direction de l'extension (203a, 203b) de la section transversale des au moins premier et deuxième moyens de mélange change le long de la direction d'écoulement.

6. Débitmètre à ultrasons (10) selon l'une quelconque des revendications précédentes, dans lequel une forme de la section transversale (29a, 29b) des au moins premier et deuxième moyens de mélange change le long de la direction d'écoulement.

7. Débitmètre à ultrasons (10) selon l'une quelconque des revendications précédentes, dans lequel le mélangeur de fluides comprend une armature, et dans lequel les moyens de mélange sont fixés à l'armature et font saillie vers l'intérieur depuis l'armature, et dans lequel les moyens de mélange individuels sont séparés par une distance de séparation (28).

8. Débitmètre à ultrasons (10) selon l'une quelconque des revendications 1 à 6, dans lequel le mélangeur de fluides comprend une armature (21), et dans lequel les moyens de mélange sont des rainures (54) dans l'armature.

9. Débitmètre à ultrasons (10) selon l'une quelconque des revendications précédentes, dans lequel le rapport L/D entre une longueur du débitmètre et un diamètre du débitmètre se situe dans la plage de 0,5 à 3.

10. Débitmètre à ultrasons (10) selon l'une quelconque des revendications précédentes, dans lequel le mélangeur de fluides est fabriqué en un seul bloc.

11. Débitmètre à ultrasons (10) selon l'une quelconque des revendications précédentes, dans lequel le débitmètre est fabriqué en un seul bloc et dans lequel le mélangeur de fluides est intégré au débitmètre.

12. Débitmètre à ultrasons (10) selon la revendication 1, dans lequel le matériau du mélangeur de fluides est un matériau choisi dans le groupe suivant : matériaux synthétiques, acier inoxydable, céramiques, composites, cuivre et alliage de cuivre.
